(19) Europäisches Patentamt
European Patent Office
Office européen des brevets

(11) **EP 1 761 886 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(51) Int Cl.:
**G06K 19/08** (2006.01)    **G06K 19/12** (2006.01)

(21) Anmeldenummer: **04740527.9**

(86) Internationale Anmeldenummer:
**PCT/EP2004/007160**

(22) Anmeldetag: **01.07.2004**

(87) Internationale Veröffentlichungsnummer:
**WO 2006/002670 (12.01.2006 Gazette 2006/02)**

(54) **BLATTFÖRMIGER BOGEN SOWIE VERFAHREN ZUR ERZEUGUNG DER DATENSICHERHEIT UND ZUR PRÜFUNG EINES ENTSPRECHENDEN BOGENS**

LEAF-TYPE SHEET AND METHOD FOR PRODUCING SECURE DATA ON SAID SHEET AND FOR VERIFYING THE LATTER

FEUILLE, ET PROCEDE POUR PRODUIRE DES DONNEES DE SECURITE SUR CETTE FEUILLE ET VERIFIER LADITE FEUILLE

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**14.03.2007 Patentblatt 2007/11**

(73) Patentinhaber: **Bossert, Daniel**
**71735 Eberdingen-Nussdorf (DE)**

(72) Erfinder: **Bossert, Daniel**
**71735 Eberdingen-Nussdorf (DE)**

(74) Vertreter: **Riedel, Peter et al**
**Patentanwalt**
**Dipl.-Ing. W. Jackisch & Partner**
**Menzelstrasse 40**
**70192 Stuttgart (DE)**

(56) Entgegenhaltungen:
**EP-A- 0 683 471     WO-A-92/16913**
**WO-A-03/045708     DE-A1- 3 225 485**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft einen blattförmigen Bogen mit den Merkmalen nach dem Oberbegriff des Anspruchs 1 sowie ein Verfahren zur Erhöhung der Datensicherheit und ein Verfahren zur Prüfung eines entsprechenden Bogens.

Blattförmige Bogen als Informationsträger werden bei einer Vielzahl von Anwendungen als personen-, waren- und/oder dienstleistungsbegleitende Unterlagen eingesetzt. Ein warenbegleitender Lieferschein beispielsweise enthält in Schriftform zahlreiche Angaben zur versendeten Ware, zum Absender und zum Empfänger. Die Ware kann auf ihrem Transportweg zahlreiche Kontrollpositionen durchlaufen, in denen beispielsweise beim Grenzübergang oder im Wareneingang des Empfängers die Informationen des Lieferscheines gelesen und geprüft werden. Die auf dem blattförmigen Bogen niedergeschriebene Information kann versehentlich fehlerhaft oder bewußt gefälscht sein.

Aus der WO 03/045 708 A3 ist ein flächiges Bogenmaterial mit einer magnetisierbaren Beschichtung bekannt. In der magnetisierbaren Beschichtung kann ein Sicherheitsmerkmal magnetisch abgelegt sein. In vorgegebenen Kontrollpunkten kann das magnetische Sicherheitsmerkmal ausgelesen und geprüft werden. Ggf. ist zur Prüfung ein Vergleich der magnetischen Information mit einer weiteren schriftlichen Information möglich. Die Ablage und/oder eine Änderung des magnetischen Sicherheitsmerkmales erfordert geeignete Spezialvorrichtungen sowie eine entsprechende Sachkenntnis, wodurch eine erhöhte Sicherheit gegen unbeabsichtigte Fehler oder vorsätzliche Fälschung gegeben ist.

Aus der WO 92/16913A ist eine Kreditkarte bekannt, die ein flächiges Kartenmaterial mit einer darauf aufgebrachten magnetisierbaren Beschichtung aufweist. Auf dem Kartenmaterial sind sichtbare Zeichenketten aufgebracht, während auf der magnetisierbaren Beschichtung eine weitere Zeichenkette abgelegt ist. Für die Fälschungssicherheit besteht noch Verbesserungspotenzial.

Der Erfindung liegt die Aufgabe zugrunde, die Fälschungssicherheit eines blattförmigen Bogens zu erhöhen.

Die Aufgabe wird durch einen blattförmigen Bogen mit den Merkmalen des Anspruchs 1, durch ein Verfahren zur Erhöhung der Datensicherheit eines entsprechenden Bogens mit den Merkmalen des Anspruchs 6 sowie durch ein Verfahren zur Prüfung eines solchen Bogens mit den Merkmalen des Anspruchs 10 gelöst.

Es wird ein blattförmiger Bogen mit einer magnetischen Beschichtung und mit einer auf das Bogenmaterial aufgebrachten, als Sicherheitsmerkmal vorgesehenen Zeichenkette vorgeschlagen, bei dem die Zeichenkette in zwei Teilketten aufgeteilt ist. Davon ist eine erste Teilkette als optisch lesbare Information auf dem Bogen und/oder im Speicher eines Transponders auf dem Bogen und die zweite Teilkette als magnetische Information in der magnetisierbaren Beschichtung des Bogens abgelegt. Dazu wird in einem entsprechenden Verfahren zur Erzeugung der Datensicherheit vorteilhaft eine dem jeweiligen Bogen individuell zuzuordnende Identifikationszeichenfolge beispielsweise in Form einer Seriennummer vom Bogen gelesen und in einer Verschlüsselungseinrichtung mit einer dort unabhängig vom Bogen verfügbaren Geheimzeichenfolge zusammengefaßt. An Stelle der fest dem Bogen zugeordneten Seriennummer kann auch eine andere, beispielsweise nutzerseitig festgelegte und dem Bogen zuzuordnende Identifikationszeichenfolge gewählt werden. Ein Nutzer kann beispielsweise entsprechend ausgeführte Frachtpapiere mit warenbezogenen Daten ausfüllen. Ein Teil dieser dem jeweiligen Bogen zuzuordnenden Daten kann als Identifikationszeichenfolge entweder vom Bogen gelesen oder direkt in die Verschlüsselungseinrichtung eingegeben werden.

Anschließend wird die zusammengefaßte Zeichenfolge als Ganzes verschlüsselt und die infolge der Verschlüsselung gebildete Zeichenkette in eine erste Teilkette und in eine zweite Teilkette aufgeteilt. Schließlich wird die erste Teilkette als optisch lesbare Information auf dem Bogen und die zweite Teilkette als magnetische Information in der magnetischen Beschichtung des Bogens abgelegt. Die Erstellung der verschlüsselten Zeichenfolge erfordert die Kenntnis der Geheimzeichenfolge, die jedoch nicht auf dem Bogen abgelegt ist. Der Nutzer des Bogens hat damit keinen Zugriff auf die Geheimzeichenfolge. Zur Erhöhung der Fälschungssicherheit ist vielmehr eine Verschlüsselungseinrichtung sowie die Kenntnis der Geheimzeichenfolge erforderlich, die beispielsweise im Zusammenhang mit einem Lieferschein beim Besteller, beim Lieferanten oder bei einer unabhängigen dritten Partei unter Verschluß gehalten wird.

Die Prüfung des Bogens erfolgt zweckmäßig, indem zunächst die auf dem Bogen abgelegte erste Teilkette und die zweite Teilkette anläßlich einer Intensivprüfung gelesen und einem Verifikationsgerät zugeführt wird. Die beiden Teilketten werden dabei zu der gesamten verschlüsselten Zeichenkette zusammengefaßt. Mittels der im Verifikationsgerät verfügbaren Geheimzeichenfolge kann aus der zusammengesetzten, verschlüsselten Zeichenkette eine Kontrollzeichenfolge gebildet und mit der auf dem Bogen abgelegten Identifikationszeichenfolge verglichen werden. Sofern beide Teilketten der verschlüsselten Zeichenkette ohne beabsichtigte oder unbeabsichtigte Manipulation der Intensivprüfung zugeführt werden, ergibt sich beim Rückrechnen mittels der Geheimzeichenfolge eine Kontrollzeichenfolge, die mit der Indentifikationszeichenfolge identisch ist. Bei Identität kann davon ausgegangen werden, daß der entsprechende Bogen autorisiert ist und keine unbeabsichtigt fehlerhaften oder bewußt gefälschten Angaben enthält. Die Zweiteilung der verschlüsselten Zeichenfolge führt zu einer erhöhten Fälschungssicherheit. Zusätzlich ergeben sich erweiterte Anwendungsmöglichkeiten. Beispielsweise kann die optisch lesbare Teilkette für sich alleine genommen gelesen werden und anläßlich einer Zwischenprüfung, bei der eine erhöhte Fälschungssicherheit nicht vorrangig ist, zur Identifikation einer Ware, einer Dienstleistung und/oder einer Person herangezogen werden.

Die erste Teilkette der verschlüsselten Zeichenkette ist vorteilhaft im Klartext lesbar, als Barcode und/oder im Speicher eines Transponders auf dem Bogen abgelegt. Die Klartextinformation kann dabei ohne Hilfsmittel sichtbar oder auch mittels einer sogenannten unsichtbaren Tinte auf den Bogen aufgebracht sein, die erst beispielsweise unter Einwirkung von UV-Licht sichtbar wird. Es ergibt sich eine vereinfachte Möglichkeit einer Zwischenprüfung, indem die erste Teilkette durch Prüfpersonal visuell gelesen oder automatisiert auf eine größere Entfernung aus dem Barcode ausgelesen bzw. mit einer entsprechenden elektronischen Empfangseinrichtung vom Transponder empfangen wird. Ein entsprechend ausgeführter warenbegleitender Lieferschein kann dabei gemeinsam mit der zugehörigen Ware verschiedene Prüfstationen mit hohem Automatisierungsgrad passieren. In einer oder mehreren weiteren Prüfstationen, beispielsweise im Wareneingang oder beim Grenzübergang, kann eine Intensivprüfung in oben beschriebener Weise mit entsprechend erhöhter Fälschungssicherheit erfolgen.

Als Identifikationszeichenfolge für den Bogen eignet sich insbesondere eine magnetisch unveränderlich in der magnetisierbaren Beschichtung abgelegte, für den jeweiligen Bogen individuell festgelegte Seriennummer. Diese Seriennummer kann ggf. noch um anwenderspezifische Daten ergänzt werden. Die Seriennummer wird bei der Herstellung der Bogen unveränderlich ins Bogenmaterial eingebracht, wodurch Fälschungsversuche spätestens bei der oben beschriebenen Intensivprüfung kenntlich gemacht werden.

Zur Verschlüsselung der zusammengesetzten, aus der Identifikationszeichenfolge und der Geheimzeichenfolge bestehenden Information hat sich eine Hashfunktion, insbesondere eine MD5-Funktion als vorteilhaft herausgestellt. Es wird damit aus jeder beliebig langen Zeichenkette eine 32-stellige Hexadezimalzahl erzeugt, die insbesondere bei der MD5-Funktion als kollisionsfrei gilt. Dies bedeutet, daß aus zwei verschiedenen Zeichenketten auch immer zwei verschiedene Hexadezimalzahlen folgen. Die Kollisionsfreiheit führt zu einem hohem Maß an Fälschungssicherheit.

In vorteilhafter Weiterbildung umfaßt das Bogenmaterial zwei Papierschichten, zwischen denen die magnetisierbare Beschichtung angeordnet ist. Die magnetisierbare Beschichtung liegt sandwichartig zwischen den beiden Papierschichten und wird dabei insbesondere gegen mechanische Beschädigungen geschützt. Die Lesbarkeit von magnetisch abgelegten Informationen bleibt dauerhaft erhalten und ist unempfindlich gegen Knickstellen und andere äußere Einflüsse, denen der Bogen ausgesetzt ist.

Insgesamt ergibt sich, daß die Geheimzeichenfolge nur am Ort der Verschlüsselung und am Ort der Intensivprüfung vorhanden sein muß. Die Geheimzeichenfolge ist weder dem Nutzer des Bogens bekannt noch auf dem Bogen selbst abgelegt. Zur weiteren Steigerung der Sicherheit kann es auch zweckmäßig sein, daß der Ort der Verschlüsselung und der Ort der Intensivprüfung identisch sind. Beispielsweise kann ein Besteller einer Ware entsprechende Warenbegleitpapiere mit der bereits aufgebrachten verschlüsselten Zeichenkette an den Lieferanten schicken, ohne daß der Lieferant Kenntnis der Geheimzeichenkette hat. Die Intensivprüfung erfolgt dann abschließend im Wareneingang des Bestellers, wodurch das Sicherheitsrisiko weiter gemindert wird. Die Erstellung der verschlüsselten, zweiteiligen Zeichenkette sowie deren Prüfung kann auch durch eine dritte, unbeteiligte Partei wie beispielsweise eine Zollbehörde erfolgen. Zur erhöhten Sicherheit trägt auch die Vergabe einer Seriennummer durch den Bogenhersteller bei, der die Seriennummer unveränderlich magnetisch auf dem Bogen ablegt. Auch diese Seriennummer unterliegt nicht dem Einfluß des Benutzers, wodurch Fälschungen erschwert sind.

Ein Ausführungsbeispiel der Erfindung ist im Folgenden anhand der Zeichnung näher beschrieben. Es zeigen:

Fig. 1 in einer schematischen Schnittdarstellung ein erfindungsgemäß ausgeführtes Bogenmaterial zusam- men mit einem weiteren Bogenmaterial zur Bildung eines Durchschreibsatzes;

Fig. 2 in einer schematischen Blockdarstellung einen blattförmigen Bogen aus dem Bogenmaterial nach Fig. 1 zusammen mit einer Verschlüsselungseinrich- tung und einem Verifikationsgerät.

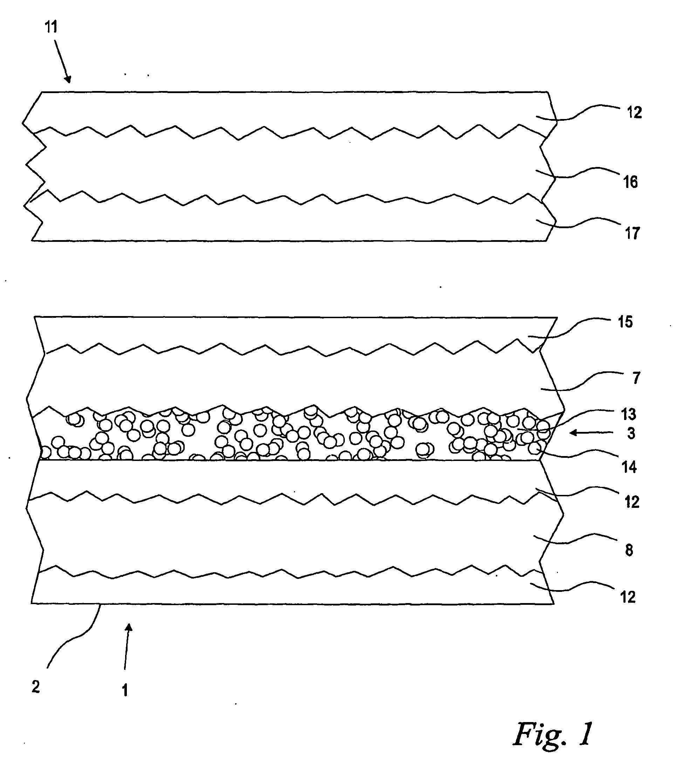

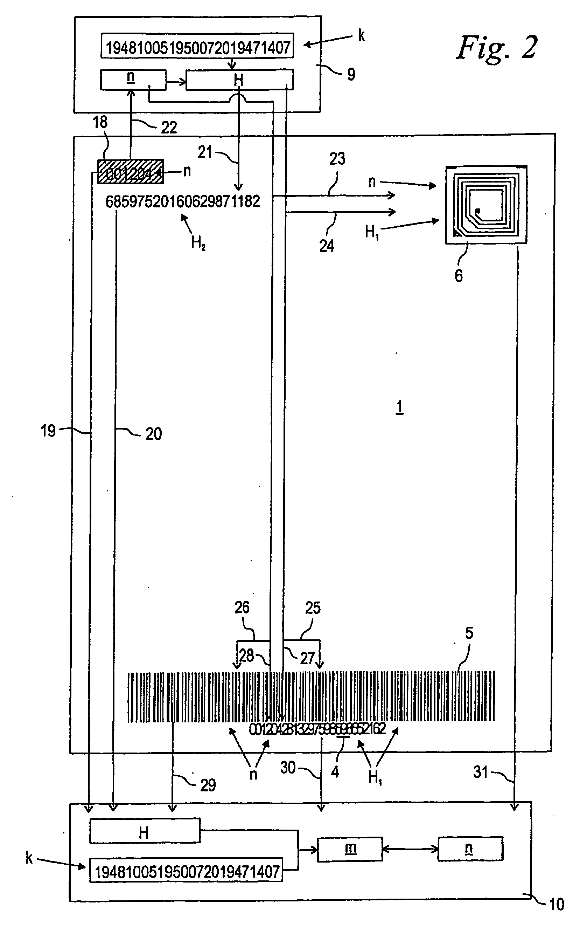

Nach der schematischen Schnittdarstellung in Fig. 1 ist ein im Zusammenhang mit Fig. 2 näher beschriebener blattförmiger Bogen 1 mit erhöhter Fälschungssicherheit aus einem flächigen Bogenmaterial 2 vorgesehen. Das flächige Bogenmaterial 2 umfaßt eine beidseitig mit einer Hochglanzbeschichtung 12 beschichtete Papierschicht 8 sowie eine weitere Papierschicht 7. Zwischen den beiden Papierschichten 7, 8 ist eine magnetisierbare Beschichtung 3 angeordnet, die aus einem Bindemittel 13 und einer Vielzahl darin gehaltener magnetisierbarer Partikel 14 besteht. Die beiden Papierschichten 7, 8 bilden zusammen mit der magnetisierbaren Beschichtung 3 einen fest miteinander verbundenen sandwichartigen Aufbau. Die flächig über das gesamte Bogenmaterial 2 verteilte magnetisierbare Beschichtung 3 ist wahlweise überschreibbar oder unveränderlich zur Aufnahme einer magnetisch abgelegten Information magnetisierbar.

Der Bogen 1 ist zusammen mit einem weiteren Bogen 11 als Durchschreibsatz geschichtet. Der Bogen 1 weist dazu auf seiner dem weiteren Bogen 11 zugewandten Seite eine Farbbildnerbeschichtung 15 auf. Der weitere Bogen 11 umfaßt eine Papierschicht 16 mit einer außenseitigen Hochglanzbeschichtung 12. Auf seiner dem Bogen 1 zugewandten Seite ist der weitere Bogen 11 mit einer Farbentwicklerbeschichtung 17 versehen. Ein Farbbildner in der Farbbildnerbeschichtung 15 kann beispielsweise in nicht näher dargestellten Mikrokapseln gehalten sein. Bei einer mechanischen Beschriftung zerplatzen die Mikrokapseln und geben den Farbbildner frei. Der freigegebene Farbbildner führt zusammen mit dem Farbentwickler der Farbentwicklerschicht 17 zu einer optisch lesbaren, durchgeschriebenen Beschriftung. Der erfindungsgemäße Bogen 1 kann auch ohne eine Farbbildnerbeschichtung 15 und ohne Kombination mit dem weiteren Bogen 11 ausgeführt sein.

Fig. 2 zeigt in einer Blockdarstellung den Bogen 1 nach Fig. 1 im Zusammenspiel mit einer Verschlüsselungseinrichtung 9 und einem Verifikationsgerät 10. In einem fixierten Bereich 18 des Bogens 1 ist herstellerseitig eine magnetisch unveränderlich in der magnetisierbaren Beschichtung 3 (Fig. 1) abgelegte, individuell für den Bogen 1 festgelegte, sechsstellige Seriennummer als Indentifikationszeichenfolge n aufgebracht. Der Bogen 1 ist darüber hinaus mit einem herstellerseitig aufgebrachten Transponder 6 versehen, der einen nicht näher dargestellten Chipspeicher sowie ein angedeutetes aufgedrucktes Antennenmuster umfaßt. Der Transponder 6 kann aufgedruckt oder als Folienbauteil aufgeklebt sein.

Zur Individualisierung des Bogens 1 mit erhöhter Fälschungssicherheit wird zunächst die dem Bogen 1 individuell zugeordnete Indentifikationszeichenfolge n gelesen und der Verschlüsselungseinrichtung 9 zugeführt (Pfeil 22). In der Verschlüsselungseinrichtung 9 ist für Unbefugte unlesbar eine 24-stellige, beispielhaft dargestellte Geheimzeichenfolge k abgelegt. Die Geheimzeichenfolge k kann permanent gespeichert oder extern beispielsweise über eine sichere Internetverbindung in der Verschlüsselungseinrichtung 9 verfügbar gemacht werden. In der Verschlüsselungseinrichtung 9 werden die Identifikationszeichenfolge n und die Geheimzeichenfolge k zusammengefaßt und gemeinsam mittels einer Hashfunktion H(x) verschlüsselt. Der Verschlüsselungsvorgang erfolgt für die beispielhaft gezeigten Werte der Identifikationszeichenfolge n und der Geheimzeichenfolge k wie folgt:

Als Identifikationszeichenfolge n wird beispielhaft die herstellerseitig vergebene und unveränderlich magnetisch in der magnetisierbaren Beschichtung 3 abgelegte Seriennummer des Bogens 1 gewählt:

$$\text{Seriennummer } n = 1024 \qquad\qquad (Gl. 1)$$

Alternativ oder zusätzlich kann auch eine nutzerseitig gewählte, beispielsweise waren-, dienstleistungs- und/ oder personenbezogene Identifikationszeichenfolge n zum Einsatz kommen.

Als Geheimzeichenfolge k ist hier beispielhaft eine 24-stellige Zahlenfolge

$$\text{Geheimzeichenfolge } k = 194810051950072019471407 \qquad (Gl. 2)$$

gewählt. Für den im folgenden beschriebenen Verschlüsselungsvorgang gelten folgende Bezeichnungen: H(x) ist eine beliebige Hashfunktion, von denen die spezielle Hashfunktion MD5(x) hier bevorzugt eingesetzt wird. Das Zeichen "‖" bedeutet eine Aneinanderreihung von Zeichenketten.

Die Bildung der verschlüsselten Zeichenkette H erfolgt nach:

$$\text{Zeichenkette } H = H(k\|H(k\|n)) \qquad\qquad (Gl. 3)$$

Mit der speziellen Hashfunktion MD5(x) und den beispielhaften Zeichenketten aus Gl. 1 und Gl. 2 ergibt sich:

$$\text{MD5}("194810051950072019471407"$$
$$\|\text{MD5}("194810051950072019471407"\|"1204")) \qquad (Gl. 4)$$

entsprechend:

$$\text{MD5}("194810051950072019471407"$$
$$\|\text{MD5}("194810051950072019471407120 4")) \qquad (Gl. 5)$$

Das Ergebnis der Hashfunktion MD5(x) ist die Zeichenkette H in Form einer 32-stellige Hexadezimalzahl, die beispielhaft hier

$$H = 2813297598598552162685975201606298711 82. \qquad \text{(Gl. 6)}$$

beträgt. Das beschriebene Verschlüsselungsverfahren wird auch HMAC genannt, abgeleitet von Hashed Message Authentification Code. Der verschlüsselten Zeichenkette H kann noch, wie hier beispielhaft durchgeführt, die Identifikationszeichenkette n mit insbesondere zwei führenden Nullen vorangestellt werden. Anschließend wird die Zeichenkette H in zwei Teilketten $H_1$, $H_2$ an beliebiger Stelle aufgeteilt, wobei hier beispielhaft die erste Teilkette $H_1$ die ersten neunzehn Ziffern der Zeichenkette H mit der vorangestellten Identifikationszeichenkette n und die zweite Teilkette $H_2$ die zweiten zwanzig Ziffern der Zeichenkette H beinhalten:

$$H_1 = 001204 - 2813297598598552162 \qquad \text{(Gl. 7)}$$

sowie:

$$H_2 = 6859752016 06 29871182 \qquad \text{(Gl. 8)}$$

Nach Bildung der beiden Teilketten $H_1$, $H_2$ wird die zweite Teilkette $H_2$ als magnetische Information mit einem nicht näher dargestellten magnetischen Schreibgerät in der magnetisierbaren Beschichtung 3 (Fig. 1) des Bogens 1 abgelegt, wie durch einen Pfeil 21 angedeutet. Der Bogen 1 ist vollflächig mit der magnetisierbaren Beschichtung 3 versehen, womit die magnetische Ablage der zweiten Teilkette an nahezu jedem beliebigen Ort des Bogens 1 erfolgen kann. Darüber hinaus können noch weitere Daten beliebig gespeichert, gelesen, geändert oder gelöscht werden. Die Speicherkapazität des Bogens 1 im DIN-A4-Format beträgt etwa 1MB.

Die erste Teilkette $H_1$ wird zusammen mit der vorangestellten Identifikatiosnzeichenfolge n entsprechend der Pfeile 27, 28 optisch lesbar im Klartext auf den Bogen 1 aufgedruckt. Im gezeigten Ausführungsbeispiel ist zusätzlich noch eine optisch lesbare Informationsablage in Form eines Barcodes 5 entsprechend der Pfeile 25, 26 vorgesehen. Alternativ oder in Kombination dazu kann auch eine Ablage im Speicherchip des Transponders 6 entsprechend der Pfeile 23, 24 vorgesehen sein.

Anläßlich einer Zwischenprüfung des Bogens 1 kann die zweite Teilkette $H_2$ in Form des Klartextes 4 durch ein Prüfpersonal visuell gelesen und geprüft werden. Eine weitere Prüfmöglichkeit ergibt sich durch Auslesen des Barcodes 5 mit einem entsprechenden optischen Lesegerät oder durch Auslesen des Speicherchips vom Transponder 6 mittels einer geeigneten Sende-/Empfangseinrichtung.

Anläßlich einer Intensivprüfung mit hohem Sicherheitsniveau werden die magnetisch, optisch und/oder im Transponder 6 abgelegten Informationen ausgelesen und dem Verifikationsgerät 10 zugeführt. Im verifikationsgerät 10 ist ebenso wie in der Verschlüsselungseinrichtung 9 die Geheimzeichenkette k verfügbar. Die magnetisch aufgebrachte zweite Teilkette $H_2$ und ggf. auch die magnetisch fest gespeicherte Identifikationszeichenfolge n werden mit einem geeigneten Magnetlesegerät ausgelesen und entsprechend der Pfeile 19, 20 dem Verifikationsgerät 10 zugeführt. Die erste Teilkette $H_1$, ggf. mit der vorangestellten Identifikationszeichenfolge n, kann visuell oder mit einer OCR-Einrichtung (Optical Character Recognition) gelesen und entsprechend dem Pfeil 30 dem Verifikationsgerät 10 zugeführt werden. Alternativ oder in Kombination dazu kann die erste Teilkette $H_1$ und die Identifikationszeichenfolge n mit entsprechenden Geräten aus dem Barcode 5 und/oder aus dem Transponder 6 ausgelesen und entsprechend der Pfeile 29, 31 im Verifikationsgerät 10 bereitgestellt werden. Dort werden die beiden Teilketten $H_1$, $H_2$ zur verschlüsselten Zeichenkette H zusammengesetzt. Aus der verschlüsselten Zeichenkette H und der Geheimzeichenfolge k wird im Verifikationsgerät eine Kontrollzeichenfolge m gebildet und mit der dort eingelesenen Identifikationszeichenfolge n gebildet. Bei festgestellter Identität der Kontrollzeichenfolge m mit der Identifikationszeichenfolge n kann mit hoher Sicherheit davon ausgegangen werden, daß die vom Bogen 1 gelesenen Daten unverfälscht sind.

Die verschlüsselte Zeichenkette H ist im gezeigten Ausführungsbeispiel ausschließlich aus der Geheimzeichenfolge k und der Identifikationszeichenfolge n in Form einer herstellerseitig aufgebrachten Seriennummer gebildet. Anstelle der Seriennummer oder zusätzlich dazu können auch kundenseitig bestimmte, beispielsweise in Relation zu einer Person, einer Ware oder einer Dienstleistung stehende Daten herangezogen werden.

Der erfindungsgemäße blattförmige Bogen zusammen mit dem erfindungsgemäßen Individualisierungs- und Prüfverfahren kann vorteilhaft insbesondere im Zusammenhang mit warenbegleitenden Papieren wie Lieferscheinen, Medikamentenrezepten oder dgl., mit dienstleistungsbegleitenden Papieren wie ärztlichen Überweisungs- oder Abrechnungsformularen sowie mit personenbegleitenden Papieren wie Eintrittskarten, Flugtickets, Wahlscheinen oder dgl. eingesetzt werden.

**Patentansprüche**

1. Blattförmiger Bogen (1), umfassend ein flächiges Bogenmaterial (2) mit einer magnetisierbaren Beschichtung (3) und mit einer auf das Bogenmaterial (2) aufgebrachten, als Sicherheitsmerkmal vorgesehenen Zeichenkette (H), wobei die Zeichenkette (H) in zwei Teilketten ($H_1$, $H_2$) aufgeteilt ist, von denen die erste Teilkette ($H_1$) als optisch lesbare Information auf dem Bogen (1) und/oder im Speicher eines Transponders (6) auf dem Bogen (1) und die zweite Teilkette ($H_2$) als magnetische Information in der magnetisierbaren Beschichtung (3) des Bogens (1) abgelegt ist, wobei die Zeichenkette (H) durch gemeinsame Verschlüsselung einer dem jeweiligen Bogen (1) individuell zugeordneten Identifikationszeichenfolge (n) und einer bezüglich des Bogens extern abgelegten Geheimzeichenfolge (k) gebildet ist, wobei die Identifikationszeichenfolge (n) eine in der magnetisierbaren Beschichtung (3) abgelegte, für den jeweiligen Bogen (1) individuell festgelegte Seriennummer ist.

2. Bogen nach Anspruch 1,
**dadurch gekennzeichnet, daß** die Identifikationszeichenfolge (n) eine insbesondere magnetisch unveränderlich in der magnetisierbaren Beschichtung (3) abgelegte, für den jeweiligen Bogen (1) individuell festgelegte Seriennummer ist.

3. Bogen nach Anspruch 1 oder 2,
**dadurch gekennzeichnet, daß** die erste Teilkette ($H_1$) im Klartext (4) lesbar auf dem Bogen (1) niedergeschrieben ist.

4. Bogen nach einem der Ansprüche 1 bis 3,
**dadurch gekennzeichnet, daß** die erste Teilkette($H_1$) als Barcode (5) auf dem Bogen (1) abgelegt ist.

5. Bogen nach einem der Ansprüche 1 bis 4,
**dadurch gekennzeichnet, daß** das Bogenmaterial (2) zwei Papierschichten (7, 8) umfaßt, zwischen denen die magnetisierbare Beschichtung (3) angeordnet ist.

6. Verfahren zur Erzeugung der Datensicherheit eines Bogens nach einem der Ansprüche 1 bis 5,
**dadurch gekennzeichnet, daß** folgende Schritte vorgesehen sind:

   - eine dem jeweiligen Bogen (1) individuell zuzuordnende Identifikationszeichenfolge (n) wird in einer Verschlüsselungseinrichtung (9) mit einer dort unabhängig vom Bogen (1) verfügbaren Geheimzeichenfolge (k) zusammengefaßt und gemeinsam verschlüsselt,
   - eine in Folge der Verschlüsselung gebildete Zeichenkette (H) wird in eine erste Teilkette ($H_1$) und in eine zweite Teilkette ($H_2$) aufgeteilt,
   - die erste Teilkette ($H_1$) wird als optisch lesbare Information auf dem Bogen (1) und die zweite Teilkette ($H_2$) als magnetische Information in der magnetisierbaren Beschichtung (3) des Bogens (1) abgelegt.

7. Verfahren nach Anspruch 6,
**dadurch gekennzeichnet, daß** die Identifikationszeichenfolge (n) auf dem jeweiligen Bogen (1) abgelegt ist und insbesondere eine magnetisch unveränderlich in der magnetisierbaren Beschichtung (3) abgelegte, für den jeweiligen Bogen (1) individuell festgelegte Seriennummer umfaßt, wobei die Identifikationszeichenfolge (n) vom Bogen (1) gelesen und der Verschlüsselungseinrichtung (9) zugeführt wird.

8. Verfahren nach Anspruch 6 oder 7,
**dadurch gekennzeichnet, daß** die Verschlüsselung mittels einer Hash-Funktion, insbesondere mittels einer MD5-Funktion erfolgt.

9. Verfahren nach einem der Ansprüche 6 bis 8,

**dadurch gekennzeichnet, daß** die erste Teilkette ($H_1$) zusätzlich im Speicher des Transponders (6) abgelegt wird.

10. Verfahren zur Prüfung eines Bogens nach einem der Ansprüche 1 bis 5, insbesondere eines nach einem der Ansprüche 6 bis 9 individualisierten Bogens,
**dadurch gekennzeichnet, daß** folgende Schritte vorgesehen sind:

a. die auf dem Bogen (1) abgelegte erste Teilkette ($H_1$) und zweite Teilkette ($H_2$) werden anläßlich einer Intensivprüfung gelesen, einem Verifikationsgerät (10) zugeführt und zu der Zeichenkette (H) zusammengefaßt;
b. aus der verschlüsselten Zeichenkette (H) und der im Verifikationsgerät (10) verfügbaren Geheimzeichenfolge (k) wird eine Kontrollzeichenfolge (m) gebildet und mit der auf dem Bogen abgelegten Identifikationszeichenfolge (n) verglichen,

11. Verfahren nach Anspruch 10,
**dadurch gekennzeichnet, daß** anläßlich einer Zwischenprüfung die erste Teilkette ($H_1$) im Klartext (4), aus dem Barcode (5) und/oder aus dem Transponder (6) gelesen wird.

**Claims**

1. Leaf-type sheet (1) comprising a flat sheet material (2) with a magnetisable coating (3) and with a character string (H) provided as security feature applied to the sheet material (2), wherein the character string (H) is divided into two sub-strings ($H_1$, $H_2$), of which the first sub-string ($H_1$) is deposited on the sheet (1) as an optically readable information and/or in the memory of a transponder (6), and the second sub-string ($H_2$) is deposited as magnetic information in the magnetisable coating (3) of the sheet (1), wherein the character string (H) is formed by the encoding of an identification character string (n) associated individually to the respective sheet (1) together with a secrect character string (k) deposited externally with regard to the sheet, wherein the identification character string (n) is an individually defined serial number deposited in the magnetisable coating for the individual sheet (1).

2. Sheet according to claim 1,
**characterised in that** the identification character string (n) is an especially magnetically unchangeable individually defined serial number deposited in the magnetisable coating (3) for the respective sheet (1).

3. Sheet according to claim 1 or 2,
**characterised in that** the first sub-string ($H_1$) is written on the sheet (1) in clear text (4) in a legible manner.

4. Sheet according to one of claims 1 to 3,
**chacterised in that** the first sub-string ($H_1$) is deposited as a bar code (5) on the sheet (1).

5. Sheet according to one of claims 1 to 4,
**chacterised in that** the sheet material (2) comprises two paper layers (7, 8), between which is arranged the magnetisable coating (3).

6. Method for generating the data security of a sheet according to one of claims 1 to 5, **chacterised in that** the following steps are provided:

- an identification character string (n) to be associated individually to the respective sheet (1) is combined and encoded together in an encoding device (9) with a secret character string (K), which is available there independently of the sheet (1),
- a character string (H) formed in succession of the encoding is divided into a first sub-string ($H_1$) and a second sub-string ($H_2$),
- the first sub-string ($H_1$) is deposited as an optically readable information on the sheet (1), and the second sub-string ($H_2$) as magnetic information in the magnetisable coating (3) of the sheet (1).

7. Method according to claim 6,
**characterised in that** the identification character string (n) is deposited on the respective sheet (1) and comprises especially a magnetically unchangeable individually defined serial number deposited in the magnetisable coating (3) for the respective sheet (1), wherein the identification character string (n) is read by the sheet (1) and supplied to the encoding device (9).

**8.** Method according to claim 6 or 7,
**characterised in that** the encoding takes place by means of a hash function, especially by means of an MD5 function.

**9.** Method according to one of claims 6 to 8,
**characterised in that** the first sub-string ($H_1$) is additionally deposited in the memory of the transponder (6).

**10.** Method for checking a sheet according to one of claims 1 to 5, especially of a sheet customised according to one of claims 6 to 9, **characterised in that** the following steps are provided:

a. the first sub-string ($H_1$) and the second sub-string ($H_2$) deposited on the sheet (1) are read at the occasion of an intensive check, supplied to a verification device, and combined to the character string (H);
b. a control character string (m) is formed from the encoded character string (H) and the secret character string (K) available in the verification device (10), and is compared to an identification character string (n) deposited on the sheet.

**11.** Method according to claim 10,
**characterised in that** the first sub-string ($H_1$) is read in clear text (4) from the bar code (5) and/or the transponder (6) at the occasion of an intermediate check.

**Revendications**

**1.** Feuille (1) comprenant un matériau de feuille plat (2) avec un revêtement apte à être aimanté (3) et une chaîne de caractères (H) appliquée sur le matériau (2) et prévue comme caractéristique de sécurité, la chaîne de caractères (H) étant divisée en deux parties ($H_1$, $H_2$), la première partie de chaîne ($H_1$) étant stockée sous la forme d'une information lisible par voie optique sur la feuille (1) et/ou dans la mémoire d'un transpondeur (6) sur la feuille (1) et la seconde partie de chaîne ($H_2$) étant stockée sous la forme d'une information magnétique dans le revêtement apte à être aimanté (3) de la feuille (1), ladite chaîne de caractères (H) étant formée par le cryptage commun d'une suite de caractères d'identification (n) associée individuellement à chaque feuille (1) et d'une suite de caractères confidentiels (k) stockée à l'extérieur de la feuille, et la suite de caractères d'identification (n) consistant en un numéro de série qui est fixé individuellement pour chaque feuille (1) et qui est stocké dans le revêtement apte à être aimanté (3).

**2.** Feuille selon la revendication 1, **caractérisée en ce que** la suite de caractères d'identification (n) consiste en un numéro de série qui est fixé individuellement pour chaque feuille (1) et qui est stocké en particulier de manière invariable magnétiquement dans le revêtement apte à être aimanté (3).

**3.** Feuille selon la revendication 1 ou 2, **caractérisée en ce que** la première partie de chaîne ($H_1$) est inscrite sur la feuille (1) pour pouvoir être lue en texte clair (4).

**4.** Feuille selon l'une des revendications 1 à 3, **caractérisée en ce que** la première partie de chaîne ($H_1$) est stockée sur la feuille sous la forme d'un code-barres (5).

**5.** Feuille selon l'une des revendications 1 à 4, **caractérisée en ce que** le matériau de feuille (2) comprend deux couches de papier (7, 8) entre lesquelles est disposé le revêtement apte à être aimanté (3).

**6.** Procédé pour produire la protection des données d'une feuille selon l'une des revendications 1 à 5, **caractérisé en ce qu'**il est prévu les étapes suivantes :

- une suite de caractères d'identification (n) à associer individuellement à chaque feuille (1) est réunie dans un dispositif de cryptage (9) avec une suite de caractères confidentiels (k) disponible dans celui-ci indépendamment de la feuille (1) et est cryptée avec ladite suite (k),
- une chaîne de caractères (H) formée à la suite du cryptage est divisée en une première partie ($H_1$) et une seconde partie ($H_2$),
- la première partie de chaîne ($H_1$) est stockée sous la forme d'une information lisible par voie optique sur la feuille (1) et la seconde partie de chaîne ($H_2$) est stockée sous la forme d'une information magnétique dans le revêtement apte à être aimanté (3) de la feuille (1).

**7.** Procédé selon la revendication 6, **caractérisé en ce que** la suite de caractères d'identification (n) est stockée sur chaque feuille (1) et comprend en particulier un numéro de série qui est fixé individuellement pour chaque feuille (1) et qui est stocké de manière invariable magnétiquement dans le revêtement apte à être aimanté (3), la suite de caractères d'identification (n) étant lue sur la feuille (1) et étant transmise au dispositif de cryptage (9).

**8.** Procédé selon la revendication 6 ou 7, **caractérisé en ce que** le cryptage se fait à l'aide d'une fonction de hachage, en particulier à l'aide d'une fonction MD5.

**9.** Procédé selon l'une des revendications 6 à 8, **caractérisé en ce que** la première partie de chaîne ($H_1$) est stockée en supplément dans la mémoire du transpondeur (6).

**10.** Procédé pour contrôler une feuille selon l'une des revendications 1 à 5, en particulier une feuille individualisée selon l'une des revendications 6 à 9, **caractérisé en ce qu'**il est prévu les étapes suivantes :

a. la première partie de chaîne ($H_1$) et la seconde partie de chaîne ($H_2$) stockées sur la feuille (1) sont lues à l'occasion d'un contrôle intensif, sont transmises à un appareil de vérification (10) et sont réunies pour former la chaîne de caractères (H) ;

b. une suite de caractères de contrôle (m) est formée à partir de la chaîne de caractères (H) cryptée et de la suite de caractères confidentiels (k) disponible dans l'appareil de vérification (10) et est comparée à la suite de caractères d'identification (n) stockée sur la feuille.

**11.** Procédé selon la revendication 10, **caractérisé en ce qu'**à l'occasion d'un contrôle intermédiaire la première partie de chaîne ($H_1$) est lue en texte clair (4), à partir du code-barres (5) et/ou du transpondeur (6).

*Fig. 1*

*Fig. 2*

19481005195007201947 1407 ← k

9

n → H

18     22

001204 ← n

21     23

n →

6859752016062987 1182

H₂     24     H₁

6

1

19     20

26     25

28 ↘     ↙ 27     5

00120428132975985986552162

29     n     30     4     H₁     31

H

k → 19481005195007201947 1407     m ↔ n

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03045708 A3
- WO 9216913 A